# EUROPEAN PATENT APPLICATION

(11) **EP 3 343 446 A1**
(43) Date of publication of application: **04.07.2018**
(21) Application number: 17208147.3
(22) Date of filing: 18.12.2017
(51) Int. Cl.: G06K 9/46, G06T 7/11, G06T 7/187, H04N 19/167

(54) **METHOD AND APPARATUS FOR ENCODING AND DECODING LISTS OF PIXELS**

(30) Priority: 28.12.2016 EP 16306837
(71) Applicant: THOMSON LICENSING, 92130 Issy les Moulineaux (FR)
(72) Inventor: FLEUREAU, Julien, 35576 Cesson Sévigné (FR); DOYEN, Didier, 35576 Cesson Sévigné (FR); THUDOR, Franck, 35576 Cesson Sévigné (FR)
(74) Representative: Huchet, Anne

(57) **Abstract**

The present disclosure relates to methods and apparatus for encoding and decoding pixel lists of an image. The pixels of an image are clustered according to at least one relationship. Clusters are stored as pixel lists. An integer matrix of the same size than the image is generated. A pixel of the image at the first index belongs to one list. The next pixel in the list has a second index. An integer is calculated according to the two indices and is stored at the first index in the matrix. The matrix may be compressed according to a lossless compression method. At decoding, a pixel with a first index in the image is associated with a pixel list. A second index is calculated according to the integer at the first index in the matrix and the pixel at the second index in the image is added to the list.

## Description

### 1. Technical field

The present disclosure relates to the domain of encoding and decoding relations between pixels of an image for example when a clustering of pixels of an image is used at different stages of an image or video processing pipeline.

### 2. Background

Pixel clustering is a mandatory step in a wide set of image and video processing pipelines. Gathering pixels of an image (and a fortiori of each images of a video sequence) in clusters is a preparatory operation for a broad variety of computation. For example, in computer vision, image segmentation is the process of partitioning a digital image into multiple segments (sets of pixels, also known as super-pixels). Another example is given by multi-view or plenoptic images. Such images are arrays of images of a same view captured from different point of views. These images are commonly used for numerous reconstruction techniques (refocusing, 3D reconstruction or photogrammetry, for example).

Such an operation may be very time and resource consuming according to the relationships to detect or to estimate between pixels and according to the size and the number of images. For instance, in multi-view images, retrieving a cluster of pixels associated with a common point in the three-dimension space is a very complex process.

An image processing pipeline is composed of a connection of image processing applications which may be executed by different devices at different nodes of a network. A same pixel clustering may be useful for different stages of the processing. Efficiently encoding, decoding and scanning such clusters of pixel is required in order to avoid having to compute the clustering several times at several nodes in the pipeline. A first way to encode pixel clusters consists in building a list of list of integers: for each cluster, listing the indices of its pixels. Another way consists in encoding a matrix of integers of the same size than the image, storing for each pixel of the image, an identifier of the cluster that the pixel belongs to. These approaches have two main drawbacks. First data they generate are not prepared for lossless compression and, as a consequence will offer a low compression rate. Second, they are not adapted to a quick scanning of the image and of the clusters at the same time. There is a lack for an encoding and a decoding methods which overcome these drawbacks.

### 3. Summary

The purpose of the present disclosure is to overcome the lack of an encoding and decoding method to store, compress and transmit lists of pixels of an image.

The purpose of the present disclosure is to overcome the lack of an encoding and decoding method to store, compress and transmit lists of pixels of an image.

The present disclosure relates to a method of encoding lists of pixels of an image in a matrix of integers. The matrix is created with the same size than the image. The method comprises, for a first pixel at a first index in the image and this pixel belonging to a list of the pixel lists:
- obtaining a second pixel at a second index in the image, the second pixel being next to said first pixel in the list; and
- encoding an integer calculated according to the first and/or the second index at the first index in the matrix.

The advantage of the method is to generate a matrix that is easy to compress with image lossless compression methods with a high level of compression, in particular when the lists of pixels are sorted in ascending or descending order of indices of their pixels.

In an embodiment, the integer to be encoded equals the second index. For multi-view images or for computer vision for instance, the matrix contains gradients of integers with clear borders. Such a low frequency matrix is compressed with a very high level of compression by image lossless compression methods.

In another embodiment, the integer to be encoded is the difference between the second index and the first index, optionally modulo the size of the matrix. For multi-view images or for computer vision for instance, the matrix large regions of a same integer. Here again, this type of matrix is compressed with a very high level of compression by image lossless compression methods.

According to a specific characteristic, the method further comprising transmitting the image associated with the matrix to a destination medium, the destination medium being a local or a remote module or device.

The present disclosure also relates to a method of decoding lists of pixels of an image from a matrix of integers. The matrix has a size equal to the size of the image. The method comprises, for a first pixel at a first index in the image, the first pixel belonging to a list of pixels:
- calculating a second index according to the first index and/or an integer read at the first index in the matrix; and
- setting a second pixel at the second index in the image as the pixel next to the first pixel in the list.

According to this method each list of pixels is decoded and scanned at the same time. Such a representation of relationship between pixels allows computing nodes of an image processing pipeline to access circular lists of pixels.

According to a specific characteristic, a list is created and initialized with the first pixel.

The present disclosure also relates to an apparatus configured for encoding lists of pixels of an image in a matrix of integers, the matrix having a size equal to the size of the image and the apparatus comprising a memory associated with at least one processor configured to, for a first pixel at a first index in the image, this first pixel belonging to a first list of said pixel lists:
- obtain a second pixel at a second index in the image, the second pixel being next to said first pixel in the list; and
- encode an integer calculated according to the first index and/or the second index at the first index in the matrix.

The present disclosure also relates to an apparatus configured for decoding lists of pixels of an image from a matrix of integers, the matrix having a size equal to the size of the image, the apparatus comprising, a memory associated with at least one processor configured to, for a first pixel at a first index in the image, said pixel belonging to a list of said lists of pixels:
- calculate a second index according to said first index and/or an integer at the first index in the matrix; and
- set a second pixel at the second index in the image as a pixel next to the first pixel in the list.

### 4. List of figures

The present disclosure will be better understood, and other specific features and advantages will emerge upon reading the following description, the description making reference to the annexed drawings wherein:
- **Figure 1** shows an image on which a pixel clustering process has been applied, according to a specific embodiment of the present principles;
- **Figure 2** illustrates a multi-view image in which relations between pixels have been computed, according to a specific embodiment of the present principles;
- **Figures 3A** shows an image, comparable to the image of figure 1, with clustered pixels as a 6 X 4 matrix of pixels indexed according to a row base scanning, according to a specific embodiment of the present principles;
- **Figure 3B** illustrates an embodiment of encoding lists of pixels of the image of figure 3A, according to a specific embodiment of the present principles;
- **Figure 3C** illustrates another embodiment of encoding lists of pixels of the image of figure 3A, according to a specific embodiment of the present principles;
- **Figures 4A** shows an image, comparable to the image of figure 2, with clustered pixels as a 5 X 4 matrix of pixels indexed according to a row base scanning, according to a specific embodiment of the present principles;
- **Figure 4B** illustrates a method of encoding lists of pixels of the image of figure 4A, according to a specific embodiment of the present principles;
- **Figure 4C** illustrates a method of encoding lists of pixels of the image of figure 4A, according to a specific embodiment of the present principles;
- **Figure 5** shows a hardware embodiment of an apparatus configured to coding or decoding lists of pixels, according to a specific embodiment of the present principles;
- **Figure 6** diagrammatically shows an embodiment of a method of encoding lists of pixels as implemented in a processing device of figure 5, according to a specific embodiment of the present principles;
- **Figure 7** diagrammatically shows an embodiment of a method of decoding lists of pixels as implemented in a processing device of figure 5, according to a specific embodiment of the present principles;

### 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It is understood that subject matter embodiments can be practiced without these specific details.

It is usual in the domain of image processing to encode coordinates of a pixel as an integer index. The index is calculated as the number of the pixel when scanning the image on a row base (according to equations [1]) or on a column base (according to equations [2]). This encoding as several advantages. First coordinates are represented by one integer instead of two and the indices are ordered in a way which reflects a scanning operation: comparing two indices is a quick calculus that says if a pixel is before or after another pixel in a given scanning. In this document, a pixel index is the equivalent of pixel coordinates as it is simple and common to convert an index in coordinates and reciprocally when knowing the width and the height of the image and the chosen scanning method.

| | |
|---|---|
| [1] n = x + w * y | {x = n % w; y = (n-x)/w} |
| [2] n = y + h * x | {y = n % h; x = (n-y)/h} |
| 'n' is the index of the pixel at coordinates (x, y) with w the width in pixels of the image and h the height in pixels of the image; | |
| x belongs to [0..w-1] and y belongs to [0..h-1]. | |

It will be appreciated that those skilled in the art will be able to devise various arrangements that, although not explicitly described or shown herein, embody the principles of the disclosure.

According to a non-limitative embodiment of the present principles, a method and a device to encode lists of pixels of an image are disclosed. The pixels of an image are clustered according to at least one relationship. It is usual, because of the technical nature of the memory of computers, to store clusters or sets in general as lists of items. A list, for example a list of pixels, may be sorted according to an ordering, for example in the ascending or descending order of the pixel's indices in the image. According to the present principles, a matrix of integers of the same size (w*h) than the image is generated. A pixel P₁ of the image at the index N₁ belongs to one list L. The next pixel in list L is a pixel P₂ which has the index N₂ in the image. An integer is calculated according to N₁ and/or N₂ and is stored at the index N₁ in the matrix. The integer is calculated according to at least of the two indices N₁ and N₂. The integer to encode in the matrix is obtained relatively to a group of indices comprising at least one of the index of P₁ and the index of P₂. For instance, this integer is N₂. In a variant, this integer is N₂-N₁. This method is further described in details on example calculus and special cases. The generated matrix may then be compressed according to a lossless compression method and may be associated with the image (which may be compressed too). They may be transmitted to a next stage of the image or video processing pipeline.

According to another non-limitative embodiment of the present principles, a method and a device to decode lists of pixels of an image are disclosed. An image of size (w*h) and a matrix of integers of the same size (w*h) are received as input. These data are potentially compressed and, if so are decompressed using an appropriate decompression method. A pixel P₁ of the image with the index N₁ is associated with a list L of pixels. Different embodiments of this initial association are further described in detail in this description. An index N₂ is calculated according to the integer I at index N₁ in the matrix and the pixel P₂ at index N₂ in the image is set as the pixel next to P₁ in the list L. For instance, N₂ is I. In a variant, N₂ = N₁ + I. This method allows a quick scanning of the pixels of the list L. In other words, the present method allows a fast scanning of all of the pixels of the image associated to P₁ in the list L. The index N₂ is calculated according to at least of the one of the values of the index N₁ and the integer I. The index N₂ is obtained relatively to a group of values comprising at least one of the index of P₁ and the integer I read in the matrix at the index N₁.

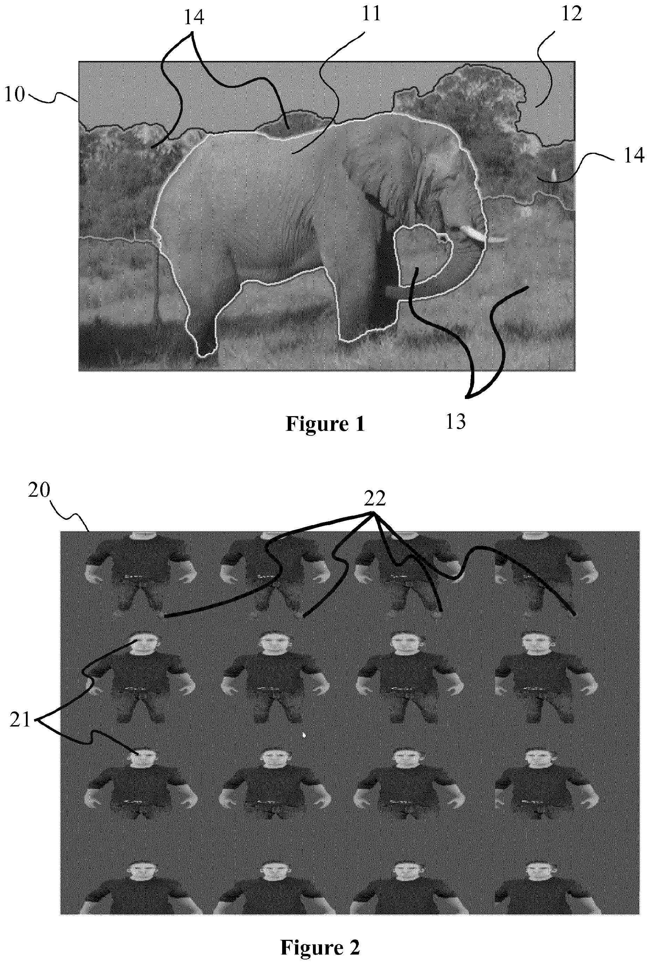

**Figure 1** shows an image 10 on which a pixel clustering process has been applied. Pixels of the image 10 have been clustered, for example by a computer vision algorithm or an object recognition algorithm. In this example image, pixels have been gathered in 4 clusters. A cluster 11 gathers pixels characteristic of the elephant; a cluster 12 gathers pixels characteristic of the sky; a cluster 13 gathers pixels characteristic of the bush; and a cluster 14 gathers pixels characteristic of trees. Clusters 11 and 12 are connected groups of pixels while clusters 13 and 14 are composed of several distinct regions of the image. Clusters have been formed by an algorithm according to a relationship between pixels of the image. In the example of figure 1, pixels have been grouped as belonging to the same kind of object. In memory, pixel clusters are encoded as lists of pixels. These four lists may be sorted, for example in the ascending order of the index of pixels according to a row base scanning.

**Figure 2** illustrates a multi-view image 20 in which relations between pixels have been computed. The image 20 is composed of sixteen sub-images captured by an array of 4 X 4 cameras. Points of the three-dimension (3D) space captured by cameras are seen up to sixteen times on the multi-view image 20. In other words, some pixels of the multi-view image represents the same point of the 3D space. For instance, a point 21 on the right eye of the character is present twelve times on the image 20 (in practice, the projected pixels do not come exactly from the same 3D point due to the discrete image sampling, but algorithms assume the collocation). A point 22 on the left shoe of the character is present four times on the multi-view image 20. Clustering pixels of a Multiview (or plenoptic) image coming from the same point of the 3D space is a useful processing in an image processing pipeline. However, such an algorithm is time and memory consuming. Encoding the results (i.e. computed relations between pixels) of such an algorithm in order to transmit them to further nodes of a pipeline is key in order not to have to compute them again. As for clusters of figure 1, clusters of figure 2 are encoded as lists of pixels. These numerous lists may be sorted, for example in the ascending order of the index of pixels according to a row base scanning.

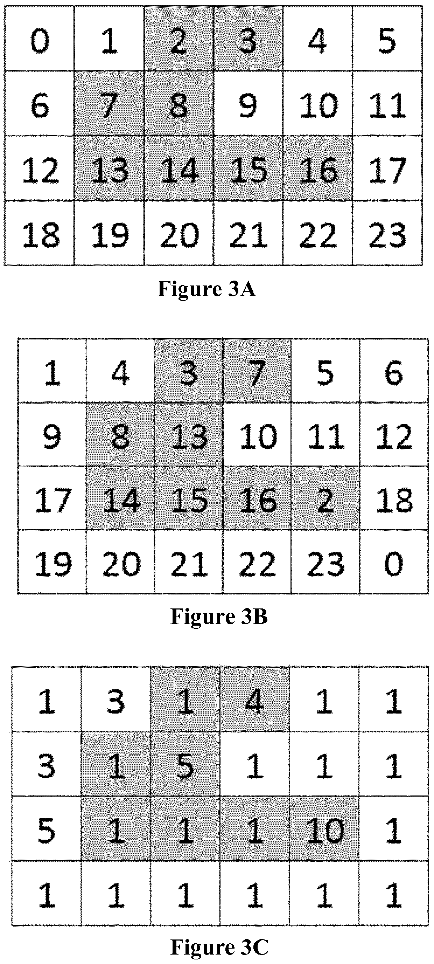

**Figures 3A** shows an image with clustered pixels as a 6 X 4 matrix of pixels indexed according to a row base scanning. Pixels are index from 0 to 23. Two clusters (white pixels and grey pixels) are shown. They may result from an algorithm as the one illustrated by figure 1. In this example, the two clusters are encoding by lists sorted according to the index of pixels. The "white" cluster lists pixels {0, 1, 4, 5, 6, 9, 10, 11, 12, 17, 18, 19, 20, 21, 22, 23} and the "grey" cluster lists pixels {2, 3, 7, 8, 13, 14, 15, 16}. The particularity of such clusters is to occupy connected regions of the image.

**Figure 3B** illustrates an embodiment of encoding lists of pixels of the image of figure 3A. Lists are encoded in an integer matrix which has the same size than the image. For a pixel of the image, an integer is calculated according to its index and the index of the next pixel in the list it belongs to. The calculated integer is then stored in the matrix at the position of the considered pixel. In this embodiment, the calculated integer is the index of the next pixel in the list. For example, for pixel 0, the next pixel in the white list is the pixel 1 and, for pixel 1, the next pixel in the white list is the pixel 4. The integer 1 is stored in the matrix at the position of the pixel 0 (i.e. at index 0) and the integer 4 is stored in the matrix at the position of the pixel 1 (i.e. at index 1). The next pixel of the last pixel of a list is the first pixel of the list. In the example of figure 3A, the next pixel of pixel 23 is pixel 0 and the next pixel of pixel 16 is pixel 2. In this example, the lists of pixels to encode are sorted in the ascending order of the index of the pixels. As lists represent clusters that occupy connected regions of the image, this embodiment of the present principles has the advantage of generating matrices with integer gradients on their rows with a pronounced border. This is illustrated, for example, on the third row of the matrix of figure 3B. Such matrices with gradients of integers can be efficiently compressed by image lossless compression algorithms. The matrices are then very light to transmit.

According to the present principles, decoding a matrix of integers allows the decoder to retrieve the lists of pixels. So, it is not needed to calculate the relationship between pixels again. If it has been compressed, the matrix is first decompressed using the appropriate decompression algorithm. The method begins by considering an integer in the matrix at a position that has not been decoded yet. At the very first step, the integer at index 0, for example, is considered. A new list is created and initiated with pixel 0: Lₐ = {0}. The integer at index 0 in the matrix is read and the index of the next pixel in the list is calculated according to the integer, 1 in the present example, and the index actually considered, 0 in the present example. In the embodiment illustrated on figure 3B, the integer is the index of the next pixel. So, pixel 1 is added to the list: Lₐ = {0, 1}. Then, the integer at the calculated index is read and a new index is calculated. In the present example, pixel 4 is added to the list. This operation is iterated until the next calculated index is the index of the first pixel in the list. At this moment, the list is completed. It has been decoded and scanned efficiently. The method may start with any pixel in the matrix. Once a list is completed, an integer that has not been considered in any previous list is considered and a new list is created. For example, a list L_{b} is initiated with the pixel 16 which does not belong to the list Lₐ. The integer at position 16 is read and the next pixel in the list is calculated. In the present example, the pixel 2 is added to the list L_{b}. This operation is iterated until pixel 16 is determined as the next pixel in the list. When all indices has been considered (all pixels has been added to a list), every lists have been reconstructed.

In a variant, for each list, a data is generated pairing the index of one pixel of the list with information relative to the list. A set of these data is transmitted in association with the matrix. In this variant, the decoding method creates lists described by the data and start decoding them at the paired index.

**Figure 3C** illustrates another embodiment of encoding lists of pixels of the image of figure 3A. In this embodiment, the integer is the difference between the index of the next pixel in the list and the actually considered index. For example, when considering the pixel 13 in the grey list, the integer stored in the matrix at index 13 is the index of pixel 14 minus the index 13: 14 - 13 = 1. The integer may be negative. For example, considering the index 16, as the next pixel in the list is at index 2, the integer stored at index 16 in the matrix is 2 - 16 = -14. In a variant, as illustrated on figure 3C, the difference is calculated modulo the size of the matrix. In the example of figure 3B, the integer stored at index 16 in the matrix is (2 - 16) % 24 = 10. When lists are sorted in the ascending order of the index of the pixels, as clusters represent connected regions of the image, the matrix contains wide regions of ones (because the next pixel in a list has often the next index). Such a matrix is compressed with a high level of compression by image lossless compression algorithms.

At the decoding, lists are retrieved form the decompressed matrix as in the embodiment described for figure 3B. In the embodiment of figure 3C, the index of the next pixel in the list under construction is calculated by adding the actually considered index to the integer read at this index in the matrix. For example, considering the index 12, the integer read at index 12 in the matrix is 5, so the next pixel in the list under construction (here, the white list) is the pixel 12 + 5 = 17. Considering index 16, the read integer is -14, so the next pixel is pixel 2. In the variant illustrated on figure 3C, the read integer is 10 and the index of the next pixel in the list is calculated modulo the size of the matrix, so, the next pixel in the grey list is pixel (16 + 10) % 24 = 2.

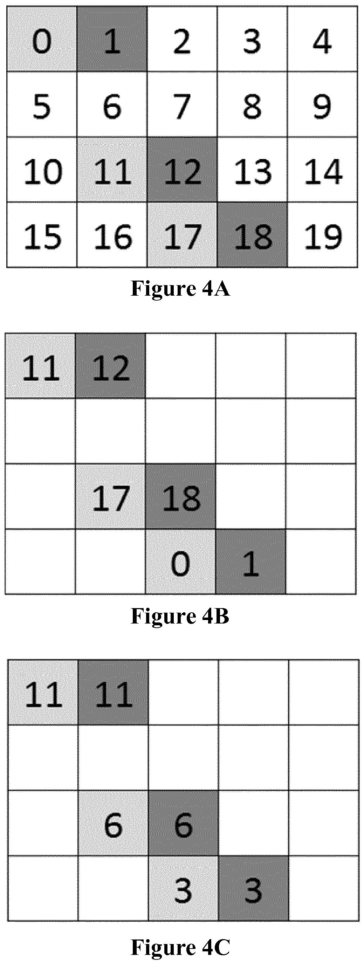

**Figures 4A** shows an image with clustered pixels as a 5 X 4 matrix of pixels indexed according to a row base scanning. Pixels are index from 0 to 19. Only two clusters are represented, a "light grey" cluster listing pixels {0, 11, 17} and a "dark grey" cluster listing pixels {1, 12, 18}. In each list, pixels are sorted according to the ascending order of their index. They may result from an algorithm as the one illustrated by figure 2. The particularity of such clusters is that pixels are distant one from others. However, when two adjacent pixels P₁₁ and P₂₁ belongs to two clusters C₁ and C₂, another pixel P₁₂ of C₁ is often adjacent to another pixel P₂₂ of C₂. When pixels are sorted in their cluster's list, for instance according to the ascending order of their indices, this property is often repeated along the lists.

**Figure 4B** illustrates a method of encoding lists of pixels of the image of figure 4A according to the embodiment described for figure 3B. At a position in the matrix of integers of the same size than the image, the stored integer is the index of the next pixel in the list. The pixel next to the last pixel of the list is the first pixel of the list. Because of the adjacency property of this kind of images when the lists are sorted, for example in the ascending order of the pixels that they comprise, the resulting matrix contains gradients of integers which can be compressed with a high level of compression by image lossless compression methods.

**Figure 4C** illustrates a method of encoding lists of pixels of the image of figure 4A according to the embodiment described for figure 3C. At a position in the matrix of integers of the same size than the image, the stored integer is the difference between the index of the next pixel in the list and the index of the considered position in the matrix. In a variant, the difference is calculated modulo the size of the matrix. Because of the adjacency property of this kind of images when the lists are sorted, for example in the ascending order of the pixels that they comprise, the resulting matrix contains wide regions of a same integer which can be compressed with a high level of compression by image lossless compression methods.

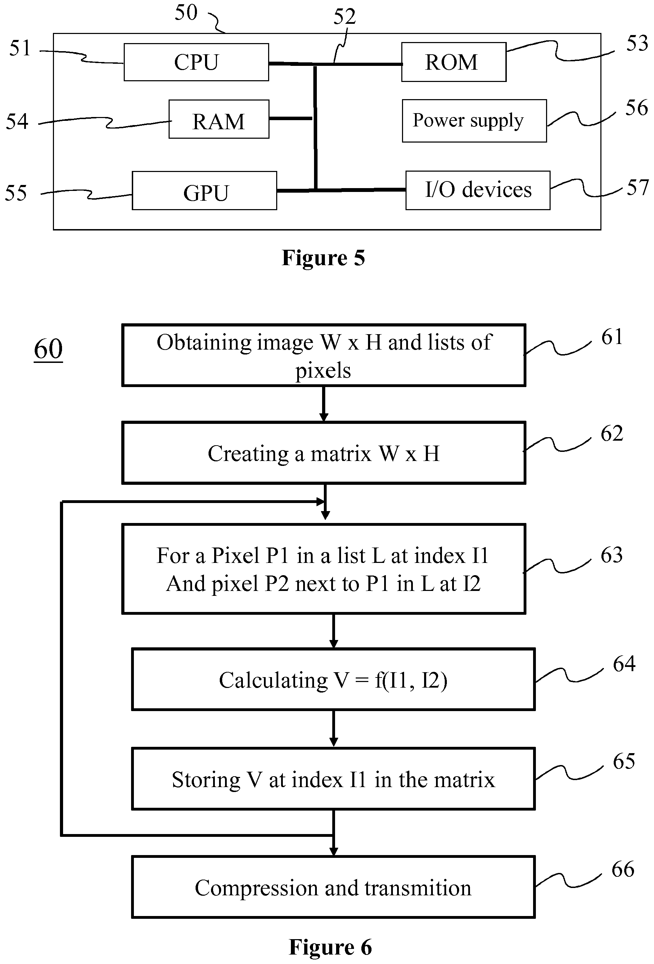

**Figure 5** shows a hardware embodiment of an apparatus 50 configured to coding or decoding lists of pixels. In this example, the device 50 comprises the following elements, connected to each other by a bus 52 of addresses and data that also transports a clock signal:
- at least one microprocessor 51 (or CPU),
- a non-volatile memory of ROM (Read Only Memory) type 53,
- a Random Access Memory or RAM (54),
The device may also comprise:
- a graphic card (GPU) 55, which may embed registers of random access memory,
- a set of I/O (Input/Output) devices 57 such as for example a mouse, a joystick, a webcam, etc., and
- a power source 56.

Advantageously, the device 50 is connected to one or more display devices (not represented) of display screen type directly to the graphics card 55 to display images calculated in the graphics card. In a variant, the one or more display device is connected to the graphic card 55 via the bus 52.

It is noted that the word "register" used in the description of memories 53, 54 and 55 designates in each of the memories mentioned, both a memory zone of low capacity (some binary data) as well as a memory zone of large capacity (enabling a whole program to be stored or all or part of the data representative of data calculated or to be displayed).

When switched-on, the microprocessor 51, according to the program in a register of the ROM 53, loads and executes the instructions of the program in registers of the RAM 54.

According to one particular embodiment, the algorithms implementing the steps of the method specific to the present disclosure and described hereafter are advantageously stored in a memory GRAM of the graphics card 55 associated with the device 50 implementing these steps.

According to a variant, the power supply 56 is external to the device 50.

**Figure 6** diagrammatically shows an embodiment of a method 60 of encoding lists of pixels as implemented in a processing device such as the device 50 according to a non-restrictive advantageous embodiment.

In initialization steps 61 and 62, lists of pixels of an image are obtained. In the present document, obtaining data, like lists of pixels, has to be understood as receiving the data from a source. For example, the source belongs to a set comprising:
- a local memory, e.g. a video memory or a RAM (or Random Access Memory), a flash memory, a ROM (or Read Only Memory), a hard disk ;
- a storage interface, e.g. an interface with a mass storage, a RAM, a flash memory, a ROM, an optical disc or a magnetic support; and
- a communication interface, e.g. a wireline interface (for example a bus interface, a wide area network interface, a local area network interface) or a wireless interface (such as a IEEE 802.11 interface or a Bluetooth® interface).

In step 61, the size of the image is obtained and the image itself may be obtained too. Advantageously, the lists of pixels are sorted, for example, in the ascending order of the pixel indices. In step 62, a matrix of integers of the same size than the image is created in the RAM 54 of the device 50. It may be initialized with a default integer value, for example zero. In a variant, the matrix is created in the memory of the graphic board 55 and lists are processed by the GPU.

In step 63, a pixel P₁ of a list L is considered. It is for example the first pixel of the first list. This pixel is located at a position with an index I₁ according to a scanning mode in the image. The present method is selecting the pixel P₂ next to P₁ in the list L. P₂ is located at a position with the index I₂ in the image. In step 64, an integer value V is computed according to I₁ and I₂; for example V = I₂. In a variant V = I₂ - I₁. In another variant V = (I₂ - I₁) % (W x H) where W is the width of the image (or the matrix) and H the height of the image (or the matrix). Any function of I₁ and I₂ may be used as long as the function for retrieving I₂ for given V and I₁ is known by (or transmitted to) the decoder. In step 65, the value V is stored in the matrix at the position with the index I₁. Advantageously, a new pixel that has not yet been considered is selected to be P₁ and the method is iterated at step 63. This new pixel may be the actual P₂. If the new pixel is the last pixel of a list, then the next pixel in the list is the first pixel of the list. When every pixels of a list have been considered, the method may be repeated for a pixel in another list. This operation is advantageously repeated until all pixels of all lists have been considered.

In step 66, the matrix may be compressed by an image lossless compression method and may be associated to the image to be transmitted to another module of an image processing pipeline. Other data may be transmitted via the same means or different means, for example parameters representative of the function used to compute the matrix.

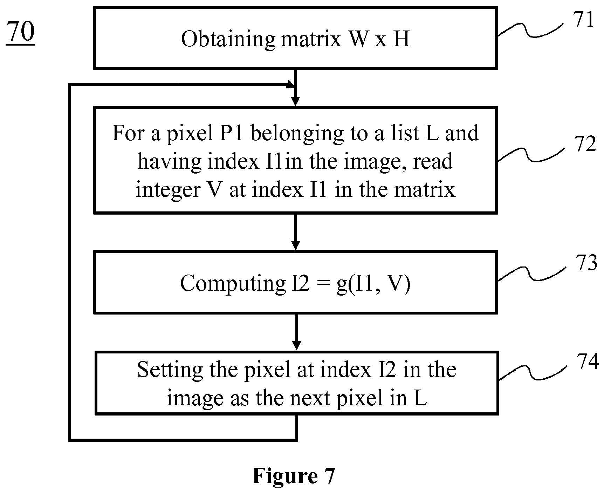

**Figure 7** diagrammatically shows an embodiment of a method 70 of decoding lists of pixels as implemented in a processing device such as the device 50 according to a non-restrictive advantageous embodiment.

In initialization step 71, a matrix of integers is obtained from a source. Optionally, the matrix is in a compressed form and is first decompressed using the appropriated image lossless decompression method. In variants, additional data are obtained jointly or separately to the matrix. For example, an image of the same size than the matrix may be obtained. Data pairing description of a list with a pixel of the list may be obtained. For instance, parameters representative of a function used to encode the lists of pixels is also obtained from the same or from a different source.

In step 72, a pixel P₁ at index I₁ in the image is considered. This pixel is known to belong to a list L. If needed, a new list of pixels is created and initialized with pixel P₁. The integer value V is read in the matrix at index I₁. As the matrix has the same size than the image, this index always exist. In step 73, a second index I₂ is calculated according to I₁ and V; for example I₂ = V. In a variant I₂ = V + I₁. In another variant I₂ = (V + I₁) % (W x H) where W is the width of the image (or the matrix) and H the height of the image (or the matrix). In step 74, the pixel P₂ at index I₂ in the image is added to the list L as the pixel next to P₁ in the list. Advantageously, a new pixel that has not yet been considered is selected to be P₁ and the method is iterated at step 72. This new pixel may be the actual P₂. If the new pixel is the first pixel of the list, then the list has been entirely decoded and scanned; the method selects a pixel of the image which has not been considered yet. When all pixels of the image have been considered, all the lists have been decoded and scanned.

Naturally, the present disclosure is not limited to the embodiments previously described. In particular, the present disclosure is not limited to method of coding and decoding lists of pixels but also extends to any method of transmitting and scanning lists of pixels encoded as a matrix of integers. The implementation of calculations necessary to encode and decode lists of pixels is not limited either to an implementation in shader type microprograms but also extends to an implementation in any program type, for example programs that can be executed by a CPU type microprocessor. The use of the methods of the present disclosure is not limited to a procedural implementation but also extends to implementations in parallel using several microprocessors.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between devices and/or end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of encoding lists of indices of pixels of an image in a matrix of integers, said matrix having a size equal to a size of said image, the method comprising, for a first pixel at a first index in the image, said first pixel belonging to a list of said pixel lists:
- obtaining a second pixel at a second index in the image, said second pixel being next to said first pixel in said list; and
- encoding an integer relative to said first index and/or said second index at the first index in the matrix.

2. An apparatus configured for encoding lists of indices of pixels of an image in a matrix of integers, said matrix having a size equal to a size of said image, the apparatus comprising a memory associated with at least one processor configured to, for a first pixel at a first index in the image, said pixel belonging to a list of said pixel lists:
- obtain a second pixel at a second index in the image, said second pixel being next to said first pixel in said list; and
- encode an integer relative to said first index and/or said second index at the first index in the matrix.

3. The method according to claim 1 or the apparatus according to 2 wherein said lists of indices of pixels are sorted in ascending or descending order.

4. The method according to claim 1 or 3 or the apparatus according to claim 2 or 3 wherein said integer to be encoded is the second index.

5. The method according to claim 1 or 3 or the apparatus according to claim 2 or 3 wherein said integer to be encoded is the difference between the second index and the first index.

6. The method according to one of claims 1 or 3 to 5 or the apparatus according to one of claims 2 to 6, comprising compressing the matrix with an image lossless compression method.

7. The method according to one of claims 1 or 3 to 6 or the apparatus according to one of claims 2 to 5, comprising transmitting the image associated with the matrix to a destination medium.

8. A method of decoding lists of indices of pixels of an image from a matrix of integers, said matrix having a size equal to a size of said image, the method comprising, for a first pixel at a first index in the image, said first pixel belonging to a list of said lists of pixels:
- calculating a second index according to said first index and/or an integer at the first index in the matrix; and
- setting a second pixel at the second index in the image as a pixel next to first pixel in the list.

9. An apparatus configured for decoding lists of pixels of an image from a matrix of integers, said matrix having a size equal to a size of said image, the apparatus comprising, a memory associated with at least one processor configured to, for a first pixel at a first index in the image, said pixel belonging to a list of said lists of pixels:
- calculate a second index according to said first index and/or an integer at the first index in the matrix; and
Set a second pixel at the second index in the image as a pixel next to the first pixel in the list.

10. The method according to claim 8 or the apparatus according to claim 9, wherein said second index is the integer at first index in the matrix.

11. The method according to claim 8 or the apparatus according to claim 9, wherein said second index is the summing of the index of first index with the integer at the first index in the matrix.

12. The method according to claim 8 or the apparatus according to claim 9, wherein said list is created and initialized with index of said first pixel.

13. The method according to one of claims 8 or 10 to 12 or the apparatus according to one of claims 9 to 12, first comprising decompressing the matrix with an image lossless compression method.

14. The method according to one of claims 8 or 10 to 13 or the apparatus according to one of claims 9 to 13, first comprising receiving the image associated with the matrix from a source medium.
